# EUROPEAN PATENT SPECIFICATION

(11) **EP 1 855 540 B1**
(45) Date of publication and mention of the grant of the patent: **27.03.2013**
(21) Application number: 06717686.7
(22) Date of filing: 06.01.2006
(51) Int. Cl.: A23G 4/06

(54) **EDIBLE COMPOSITIONS CONTAINING SWELLABLE POLYMERS**
VERZEHRBARE ZUSAMMENSETZUNGEN MIT QUELLBAREN POLYMEREN
COMPOSITIONS COMESTIBLES CONTENANT DES POLYMERES DILATABLES

(30) Priority: 11.01.2005 US 643081 P
(43) Date of publication of application: 21.11.2007
(73) Proprietor: Kraft Foods Global Brands LLC, Northfield, IL 60093 (US)
(72) Inventor: GEBRESELASSIE, Petros, NJ 08904 (US); BOGHANI, Navaroz, Flanders, New Jersey 07836 (US); VISSCHER, Glenn, Morris Plains, New Jersey 07950 (US)
(74) Representative: Wilson Gunn
(86) International application number: PCT/US2006/000518
(87) International publication number: WO 2006/076233

(56) References cited:
- EP-A- 0 455 598
- US-A- 3 117 872
- US-A- 3 761 286
- US-A- 4 448 789
- US-A- 4 997 659
- US-A- 5 139 794
- US-A- 5 501 864
- US-A1- 2004 111 275

## Description

### FIELD OF THE INVENTION

The present invention relates to swellable gum compositions which increase in volume upon chewing. The gum compositions include a superabsorbant hydrophilic polymer in combination with a gum base or as a component of a gum base.

### BACKGROUND OF THE INVENTION

Chewing and bubble gum compositions which are larger than traditional gum pieces have become popular among certain groups. For example, gum composition such as shredded gums and those in "tape" configurations allow the user to select the amount of gum to achieve a desired sized piece for chewing.

US 3761286 discloses a chewing gum composition comprising chewing gum and a water insoluble hydrophilic Polymer of a hydroxyalkyl acrylate or methacrylate having controllably, releasably adsorbed therein a flavor, wherein the hydrophilic Polymer can be poly-(2-hydroxy ethyl methacrylate).

It would be desirable to provide a gum composition which not only initially swells to provide a large bolus and sensation of juiciness, but which retains a swollen form during mastication to enhance and/or extend the experience of bolus volume, juiciness and softness, but also allows for traditional size pieces in packaging before chewing.

### SUMMARY OF THE INVENTION

Some embodiments provide a chewing gum compositions which swells during mastication to provide a large bolus and an enhanced juiciness. This includes a swellable hydrophilic polymer, which absorbs moisture from the mouth as the gum composition is chewed. The release of water-soluble components during mastication is counteracted with the concomitant adsorption of moisture due to the absorbing polymer, thereby retaining the sensation of bolus volume and juiciness.

In some embodiments there are gum compositions which increase in size when introduced to water, such as by saliva, upon chewing. These compositions may include a gum base and at least one swellable hydrophilic polymer. The hydrophilic polymer includes a superabsorbent acrylate polymer.

In other embodiments, there are gum compositions which include a gum base and a swellable hydrophilic polymer. These gum compositions also increase in size upon chewing when they are exposed to saliva. The gum base includes at least one polymer selected from polyisobutylene, styrene butadiene rubber, and combinations thereof.

### DETAILED DESCRIPTION OF THE INVENTION

The present invention relates to a composition as described in claim 1, to a method of increasing the volume of a gum composition as described in claim 5, and to a method of increasing the perception of juiciness of a chewing gum composition as described in claim 6.

As used herein the transitional term "comprising," (also "comprises," etc.) which is synonymous with "including," "containing," or "characterized by," is inclusive or open-ended and does not exclude additional, unrecited elements or method steps, regardless of its use in the preamble or the body of a claim.

As used herein, the terms "bubble gum" and "chewing gum" are used interchangeably and are both meant to include any gum compositions.

The gum compositions include a superabsorbent hydrophilic polymer in combination with a gum base or as a component of a gum base. Other suitable components such as fillers, sweeteners, etc, may also be included.

The term "superabsorbent polymer" is meant to include polymers that can absorb and retain extremely large amounts of liquid relative to its own mass. The liquid absorbed may be either water or an organic liquid and the swelling ratio of the superabsorbent polymer is up to 1000:1. IUPAC, "Pure and Applied Chemistry" 76, 889-906, 2004*.* Swelling ratio is a ratio of the swollen volume of the polymer to the initial volume of the polymer. In some embodiments, the superabsorbent polymer may have a swelling ratio of up to about 500:1 1 or 300: 1.

The swellable hydrophilic polymer is a superabsorbant acrylate polymer. This polymer is selected from polyacrylate/polyalcohol copolymers, polyacrylate/polyacrylamide copolymers, crosslinked sodium polyacrylate, polyalcohol polymer, and combinations thereof. The swellable polymer may be present in any effective amount to provide the desired swelling effect. For example, the polymer may be present in an amount from 0.1% to 5%, desirably from 0.5% to 3.5% and more desirably from 1% to 2% by weight of the total chewing gum composition "Swelling" refers to an increase in the volume of the hydrophilic polymer and as a result, and increase in the volume of the total gum composition. The hydrophilic polymers increase in volume after being contacted with water, which may be from the water present in the mouth. The volume of the gum composition may double, i.e., a 100% increase or expansion in the volume of the gum composition. The swelling of the composition is an increase in volume from 10% to 300% of the gum composition.

The incorporation of hydrophilic swellable polymers in a gum composition provides many advantages over conventional gum compositions. The hydrophilic swellable polymers reduce the perception of hardening of the composition due to release of water soluble components by increasing the amount of water within the gum composition. This assists the maintenance or increase of the bolus volume and an enhanced perception of juiciness of the gum composition.

The elastomers (rubbers) employed in the gum base will vary greatly depending upon various factors such as the type of gum base desired, the consistency of gum composition desired and the other components used in the composition to make the final chewing gum product. The elastomer may be any water-insoluble polymer known in the art, and includes those gum polymers utilized for chewing gums and bubble gums. Illustrative examples of suitable polymers in gum bases include both natural and synthetic elastomers. For example, those polymers which are suitable in gum base compositions include, without limitation, natural substances (of vegetable origin) such as chicle, natural rubber, crown gum, nispero, rosidinha, jelutong, perillo, niger gutta, tunu, balata, guttapercha, lechi capsi, sorva, gutta kay, and the like, and combinations thereof. Examples of synthetic elastomers include, without limitation, styrene-butadiene copolymers (SBR), polyisobutylene, isobutylene-isoprene copolymers, polyethylene, polyvinyl acetate and the like, and combinations thereof. Specific examples of elastomers include polyisobutylene, styrene butadiene rubber, and combinations thereof.

Additional useful polymers include: polybutuylmethacrylate/acrylic acid copolymers, polyvinylacetate/vinylalcohol copolymers, microcrystalline celluylose, sodium carboxymethyl cellulose, hydroxylpropylmethyl cellulose, crosslinked cellulose acetate phthalate, crosslinked hydroxyl methyl cellulose polymers, zein, crosslinked polyvinyl pyrrolidone, polymethylmethacrylate/acrylic acid copolymers, copolymers of lactic acid, polyhydroxyalkanoates, plasticized ethylcellulose, polyvinyl acetatephthalate and combinations thereof.

The amount of elastomer employed in the gum base may vary depending upon various factors such as the type of gum base used, the consistency of the gum composition desired and the other components used in the composition to make the final chewing gum product. In general, the elastomer will be present in the gum base in an amount from 2% to 60% by weight of the gum composition, desirably from 35% to 40% by weight.

In some embodiments, the gum base may include wax. It softens the polymeric elastomer mixture and improves the elasticity of the gum base. When present, the waxes employed will have a melting point below 60°C., and preferably between 45°C. and 55°C. The low melting wax may be a paraffin wax. The wax may be present in the gum base in an amount up to 25%, and preferably from 7% to 9.5%, by weight of the gum base.

In addition to the low melting point waxes, waxes having a higher melting point may be used in the gum base in amounts up to 5%, by weight of the gum base. Such high melting waxes include beeswax, vegetable wax, candelilla wax, carnuba wax, most petroleum waxes, and the like, and mixtures thereof.

In addition to the components set out above, the gum base may include a variety of other ingredients, such as components selected from elastomer solvents, emulsifiers, plasticizers, fillers, and mixtures thereof.

The gum base may contain elastomer solvents to aid in softening the elastomer component. Such elastomer solvents may include those elastomer solvents known in the art, for example, terpinene resins such as polymers of alpha-pinene or beta-pinene, methyl, glycerol and pentaerythritol esters of rosins and modified rosins and gums such as hydrogenated, dimerized and polymerized rosins, and mixtures thereof. Examples of elastomer solvents suitable for use herein may include the pentaerythritol ester of partially hydrogenated wood and gum rosin, the pentaerythritol ester of wood and gum rosin, the glycerol ester of wood rosin, the glycerol ester of partially dimerized wood and gum rosin, the glycerol ester of polymerized wood and gum rosin, the glycerol ester of tall oil rosin, the glycerol ester of wood and gum rosin and the partially hydrogenated wood and gum rosin and the partially hydrogenated methyl ester of wood and rosin, and the like, and mixtures thereof. The elastomer solvent may be employed in the gum base in amounts up to 25%, and preferably from 7% to 11%, by weight of the gum base.

The gum base may also include emulsifiers which aid in dispersing the immiscible components into a single stable system. The emulsifiers useful in this invention include glyceryl monostearate, lecithin, fatty acid monoglycerides, diglycerides, propylene glycol monostearate, and the like, and mixtures thereof. The emulsifier may be employed in amounts from 2% to 50%, and more specifically, from 7% to 11%, by weight of the gum base.

The gum base may also include plasticizers or softeners to provide a variety of desirable textures and consistency properties. Because of the low molecular weight of these ingredients, the plasticizers and softeners are able to penetrate the fundamental structure of the gum base making it plastic and less viscous. Useful plasticizers and softeners include lanolin, palmitic acid, oleic acid, stearic acid, sodium stearate, potassium stearate, glyceryl triacetate, glyceryl lecithin, glyceryl monostearate, propylene glycol monostearate, acetylated monoglyceride, glycerine, and the like, and mixtures thereof. Waxes, for example, natural and synthetic waxes, hydrogenated vegetable oils, petroleum waxes such as polyurethane waxes, polyethylene waxes, paraffin waxes, microcrystalline waxes, fatty waxes, sorbitan monostearate, tallow, propylene glycol, mixtures thereof, and the like, may also be incorporated into the gum base. The plasticizers and softeners are generally employed in the gum base in amounts up to 20% by weight of the gum base, and more specifically in amounts from 9% to 17%, by weight of the gum base.

Plasticizers also include are the hydrogenated vegetable oils and include soybean oil and cottonseed oil which may be employed alone or in combination. These plasticizers provide the gum base with good texture and soft chew characteristics. These plasticizers and softeners are generally employed in amounts from 5% to about 14%, and more specifically in amounts from about 5% to 13.5%, by weight of the gum base.

Anhydrous glycerin may also be employed as a softening agent, such as the commercially available United States Pharmacopeia (USP) grade. Glycerin is a syrupy liquid with a sweet warm taste and has a sweetness of 60% of that of cane sugar. Because glycerin is hygroscopic, the anhydrous glycerin may be maintained under anhydrous conditions throughout the preparation of the chewing gum composition.

In some embodiments, the gum base of this invention may also include effective amounts of bulking agents such as mineral adjuvants which may serve as fillers and textural agents. Useful mineral adjuvants include calcium carbonate, magnesium carbonate, alumina, aluminum hydroxide, aluminum silicate, talc, tricalcium phosphate, dicalcium phosphate, calcium sulfate and the like, and mixtures thereof. These fillers or adjuvants may be used in the gum base compositions in various amounts. The amount of filler, may be present in an amount up to 40%, and more specifically up to 30%, by weight of the gum base. In some embodiments, the amount of filler will be from about zero to about 15%, more specifically from about 3% to about 11%.

A variety of traditional ingredients may be optionally included in the gum base in effective amounts such as coloring agents, antioxidants, preservatives, flavoring agents, and the like. For example, titanium dioxide and other dyes suitable for food, drug and cosmetic applications, known as F. D. & C. dyes, may be utilized. An anti-oxidant such as butylated hydroxytoluene (BHT), butylated hydroxyanisole (BHA), propyl gallate, and mixtures thereof, may also be included. Other conventional chewing gum additives known to one having ordinary skill in the chewing gum art may also be used in the gum base.

Some embodiments extend to methods of making the center-fill gum compositions. The manner in which the gum base components are mixed is not critical and is performed using standard techniques and apparatus known to those skilled in the art. In a typical method, an elastomer is admixed with an elastomer solvent and/or a plasticizer and/or an emulsifier and agitated for a period of from 1 to 30 minutes. The remaining ingredients, such as the low melting point wax, are then admixed, either in bulk or incrementally, while the gum base mixture is blended again for 1 to 30 minutes.

The gum composition may include amounts of conventional additives selected from the group consisting of sweetening agents (sweeteners), plasticizers, softeners, emulsifiers, waxes, fillers, bulking agents (carriers, extenders, bulk sweeteners), mineral adjuvants, flavoring agents (flavors, flavorings), coloring agents (colorants, colorings), antioxidants, acidulants, thickeners, medicaments, and the like, and mixtures thereof. Some of these additives may serve more than one purpose. For example, in sugarless gum compositions, a sweetener, such as maltitol or other sugar alcohol, may also function as a bulking agent.

The plasticizers, softening agents, mineral adjuvants, waxes and antioxidants discussed above, as being suitable for use in the gum base, may also be used in the chewing gum composition. Examples of other conventional additives which may be used include emulsifiers, such as lecithin and glyceryl monostearate, thickeners, used alone or in combination with other softeners, such as methyl cellulose, alginates, carrageenan, xanthan gum, gelatin, carob, tragacanth, locust bean gum, pectin, alginates, galactomannans such as guar gum, carob bean gum, glucomannan, gelatin, starch, starch derivatives, dextrins and cellulose derivatives such as carboxy methyl cellulose, acidulants such as malic acid, adipic acid, citric acid, tartaric acid, fumaric acid, and mixtures thereof, and fillers, such as those discussed above under the category of mineral adjuvants.

In some embodiments, the gum region may also contain a bulking agent. Suitable bulking agents may be water-soluble and include sweetening agents selected from, but not limited to, monosaccharides, disaccharides, polysaccharides, sugar alcohols, and mixtures thereof; randomly bonded glucose polymers such as those polymers distributed under the tradename POLYDEXTROSE by Pfizer, Inc., Groton, Conn.; isomalt (a racemic mixture of alpha-D-glucopyranosyl-1,6-mannitol and alpha-D-glucopyranosyl-1,6-sorbitol manufactured under the tradename PALATINIT by Suddeutsche Zucker), maltodextrins; hydrogenated starch hydrolysates; hydrogenated hexoses; hydrogenated disaccharides; minerals, such as calcium carbonate, talc, titanium dioxide, dicalcium phosphate; celluloses; and mixtures thereof.

Suitable sugar bulking agents include monosaccharides, disaccharides and polysaccharides such as xylose, ribulose, glucose (dextrose), mannose, galactose, fructose (levulose), sucrose (sugar), maltose, invert sugar, partially hydrolyzed starch and corn syrup solids, and mixtures thereof.

Suitable sugar alcohol bulking agents include sorbitol, xylitol, mannitol, galactitol, maltitol, and mixtures thereof.

Suitable hydrogenated starch hydrolysates include those disclosed in U.S. Pat. Nos. 25,959, 3,356,811, 4,279,931 and various hydrogenated glucose syrups and/or powders which contain sorbitol, hydrogenated disaccharides, hydrogenated higher polysaccharides, or mixtures thereof. Hydrogenated starch hydrolysates are primarily prepared by the controlled catalytic hydrogenation of corn syrups. The resulting hydrogenated starch hydrolysates are mixtures of monomeric, dimeric, and polymeric saccharides. The ratios of these different saccharides give different hydrogenated starch hydrolysates different properties. Mixtures of hydrogenated starch hydrolysates, such as LYCASIN, a commercially available product manufactured by Roquette Freres of France, and HYSTAR, a commercially available product manufactured by Lonza, Inc., of Fairlawn, N.J., are also useful.

The sweetening agents used may be selected from a wide range of materials including water-soluble sweeteners, water-soluble artificial sweeteners, water-soluble sweeteners derived from naturally occurring water-soluble sweeteners, dipeptide based sweeteners, and protein based sweeteners, including mixtures thereof. Without being limited to particular sweeteners, representative categories and examples include:
(a) water-soluble sweetening agents such as dihydrochalcones, monellin, steviosides, glycyrrhizin, dihydroflavenol, and sugar alcohols such as sorbitol, mannitol, maltitol, and L-aminodicarboxylic acid aminoalkenoic acid ester amides, such as those disclosed in U.S. Pat. No. 4,619,834, and mixtures thereof;
(b) water-soluble artificial sweeteners such as soluble saccharin salts, i.e., sodium or calcium saccharin salts, cyclamate salts, the sodium, ammonium or calcium salt of 3,4-dihydro-6-methyl-1,2,3-oxathiazine-4-one-2,2-dioxide, the potassium salt of 3,4-dihydro-6-methyl-1,2,3-oxathiazine-4-one-2,2-dioxide (Acesulfame-K), the free acid form of saccharin, and mixtures thereof;
(c) dipeptide based sweeteners, such as L-aspartic acid derived sweeteners, such as L-aspartyl-L-phenylalanine methyl ester (Aspartame), N-[N-(3,3-dimethylbutyl)-L-α-aspartyl]-L-phenylalanine 1-methyl ester (Neotame), and materials described in U.S. Pat. No. 3,492,131, L-alphaaspartyl-N-(2,2,4,4-tetramethyl-3-thietanyl)-D-alaninamide hydrate (Alitame), methyl esters of L-aspartyl-L-phenylglycerine and L-aspartyl-L-2,5-dihydrophenyl-glycine, L-aspartyl-2,5-dihydro-L-phenylalanine; L-aspartyl-L-(1-cyclohexen)-alanine, and mixtures thereof;
(d) water-soluble sweeteners derived from naturally occurring water-soluble sweeteners, such as chlorinated derivatives of ordinary sugar (sucrose), e.g., chlorodeoxysugar derivatives such as derivatives of chlorodeoxysucrose or chlorodeoxygalactosucrose, known, for example, under the product designation of Sucralose; examples of chlorodeoxysucrose and chlorodeoxygalactosucrose derivatives include but are not limited to: 1-chloro-1'-deoxysucrose; 4-chloro-4-deoxy-alpha-D-galactopyranosyl-alpha-D-fructofuranoside, or 4-chloro-4-deoxygalactosucrose; 4-chloro-4-deoxy-alpha-D-galactopyranosyl-1-chloro-1-deoxy-beta-D-fructo-f uranoside, or 4,1'-dichloro-4,1'-dideoxygalactosucrose; 1',6'-dichlorol',6'-dideoxysucrose; 4-chloro-4-deoxy-alpha-D-galactopyranosyl-1,6-dichloro-1,6-dideoxy-beta-D- fructofuranoside, or 4,1',6'-trichloro-4,1',6'-trideoxygalactosucrose; 4,6-dichloro-4,6-dideoxy-alpha-D-galactopyranosyl-6-chloro-6-deoxy-beta-D- fructofuranoside, or 4,6,6'-trichloro-4,6,6'-trideoxygalactosucrose; 6,1',6'-trichloro-6,1',6'-trideoxysucrose; 4,6-dichloro-4,6-dideoxy-alpha-D-galacto-pyranosyl-1,6-dichloro-1,6-dideox γ-beta-D-fructofuranoside, or 4,6,1',6'-tetrachloro4,6,1',6'-tetradeoxygalacto-sucrose; and 4,6,1'6'-tetradeoxy-sucrose, and mixtures thereof; and
(e) protein based sweeteners such as thaumaoccous danielli (Thaumatin I and II).

The intense sweetening agents may be used in many distinct physical forms well-known in the art to provide an initial burst of sweetness and/or a prolonged sensation of sweetness. Without being limited thereto, such physical forms include free forms, such as spray dried, powdered, beaded forms, encapsulated forms, and mixtures thereof.

Desirably, the sweetener is a high intensity sweetener such as aspartame, neotame, sucralose, and acesulfame potassium (Ace-K).

Combinations of high intensity sweeteners are also contemplated.

In general, an effective amount of sweetener may be utilized to provide the level of sweetness desired, and this amount may vary with the sweetener selected. The amount of sweetener may be present in amounts from 0.001% to 3%, by weight of the gum composition, depending upon the sweetener or combination of sweeteners used. The exact range of amounts for each type of sweetener may be selected by those skilled in the art.

The flavoring agents which may be used include those flavors known to the skilled artisan, such as natural and artificial flavors. These flavorings may be chosen from synthetic flavor oils and flavoring aromatics and/or oils, oleoresins and extracts derived from plants, leaves, flowers, fruits, and so forth, and combinations thereof. Nonlimiting representative flavor oils include spearmint oil, cinnamon oil, oil of wintergreen (methyl salicylate), peppermint oil, clove oil, bay oil, anise oil, eucalyptus oil, thyme oil, cedar leaf oil, oil of nutmeg, allspice, oil of sage, mace, oil of bitter almonds, and cassia oil. Also useful flavorings are artificial, natural and synthetic fruit flavors such as vanilla, and citrus oils including lemon, orange, lime, grapefruit, and fruit essences including apple, pear, peach, grape, strawberry, raspberry, cherry, plum, pineapple, apricot and so forth. These flavoring agents may be used in liquid or solid form and may be used individually or in admixture. Commonly used flavors include mints such as peppermint, menthol, spearmint, artificial vanilla, cinnamon derivatives, and various fruit flavors, whether employed individually or in admixture. Flavors may also provide breath freshening properties, particularly the mint flavors when used in combination with the cooling agents, described herein below.

Other useful flavorings include aldehydes and esters such as cinnamyl acetate, cinnamaldehyde, citral diethylacetal, dihydrocarvyl acetate, eugenyl formate, p-methylamisol, and so forth may be used. Generally, any flavoring or food additive such as those described in Chemicals Used in Food Processing, publication 1274, pages 63-258, by the National Academy of Sciences, may be used. This may include natural as well as synthetic flavors.

Further examples of aldehyde flavorings include but are not limited to acetaldehyde (apple), benzaldehyde (cherry, almond), anisic aldehyde (licorice, anise), cinnamic aldehyde (cinnamon), citral, i.e., alpha-citral (lemon, lime), neral, i.e., beta-citral (lemon, lime), decanal (orange, lemon), ethyl vanillin (vanilla, cream), heliotrope, i.e., piperonal (vanilla, cream), vanillin (vanilla, cream), alpha-amyl cinnamaldehyde (spicy fruity flavors), butyraldehyde (butter, cheese), valeraldehyde (butter, cheese), citronellal (modifies, many types), decanal (citrus fruits), aldehyde C-8 (citrus fruits), aldehyde C-9 (citrus fruits), aldehyde C-12 (citrus fruits), 2-ethyl butyraldehyde (berry fruits), hexenal, i.e., trans-2 (berry fruits), tolyl aldehyde (cherry, almond), veratraldehyde (vanilla), 2,6-dimethyl-5-heptenal, i.e., melonal (melon), 2,6-dimethyloctanal (green fruit), and 2-dodecenal (citrus, mandarin), cherry, grape, strawberry shortcake, and mixtures thereof.

In some embodiments, the flavoring agent may be employed in either liquid form and/or dried form. When employed in the latter form, suitable drying means such as spray drying the oil may be used. Alternatively, the flavoring agent may be absorbed onto water soluble materials, such as cellulose, starch, sugar, maltodextrin, gum arabic and so forth or may be encapsulated. The actual techniques for preparing such dried forms are well-known.

In some embodiments, the flavoring agents may be used in many distinct physical forms well-known in the art to provide an initial burst of flavor and/or a prolonged sensation of flavor. Without being limited thereto, such physical forms include free forms, such as spray dried, powdered, beaded forms, encapsulated forms, and mixtures thereof.

The amount of flavoring agent employed herein may be a matter of preference subject to such factors as the type of final chewing gum composition, the individual flavor, the gum base employed, and the strength of flavor desired. Thus, the amount of flavoring may be varied in order to obtain the result desired in the final product and such variations are within the capabilities of those skilled in the art without the need for undue experimentation. In gum compositions, the flavoring agent is generally present in amounts from 0.02% to 5%, and more specifically from 0.1% to 2%, and even more specifically, from 0.8% to 1.8%, by weight of the chewing gum composition.

Coloring agents may be used in amounts effective to produce the desired color. The coloring agents may include pigments which may be incorporated in amounts up to about 6%, by weight of the gum composition. For example, titanium dioxide may be incorporated in amounts up to 2%, and preferably less than 1%, by weight of the gum composition. The colorants may also include natural food colors and dyes suitable for food, drug and cosmetic applications. These colorants are known as F.D.& C. dyes and lakes. The materials acceptable for the foregoing uses are preferably water-soluble. Illustrative nonlimiting examples include the indigoid dye known as F.D.& C. Blue No.2, which is the disodium salt of 5,5-indigotindisulfonic acid. Similarly, the dye known as F.D.& C. Green No.1 comprises a triphenylmethane dye and is the monosodium salt of 4-[4-(N-ethyl-p-sulfoniumbenzylamino) diphenylmethylene]-[1-(N-ethyl -N-p-sulfoniumbenzyl)-delta-2,5-cyclohexadieneimine]. A full recitation of all F.D.& C. colorants and their corresponding chemical structures may be found in the Kirk-Othmer Encyclopedia of Chemical Technology, 3rd Edition, in volume 5 at pages 857-884.

Suitable oils and fats usable in gum compositions include partially hydrogenated vegetable or animal fats, such as coconut oil, palm kernel oil, beef tallow, and lard, among others. These ingredients when used are generally present in amounts up to 7%, and preferably up to 3.5%, by weight of the gum composition.

Some embodiments may include a method for preparing the improved chewing gum compositions for the gum region, including both chewing gum and bubble gum compositions. The chewing gum compositions may be prepared using standard techniques and equipment known to those skilled in the art. The apparatus useful in accordance with some embodiments comprises mixing and heating apparatus well known in the chewing gum manufacturing arts, and therefore the selection of the specific apparatus will be apparent to the artisan.

The features and advantages of the present invention are more fully shown by the following examples which are provided for purposes of illustration, and are not to be construed as limiting the invention in any way.

### EXAMPLE

### Examples A-E

| Component | % by weight | | | | | |
|---|---|---|---|---|---|---|
| | A | B | C | D | E | F |
| Gum base | 65-70 | 65-70 | 50-60 | 50-60 | 60-70 | 0 |
| | 0 | 0 | 0 | 0 | 0 | 50-60 |
| Bulking agent | 22-25 | 15-22 | 22-42 | 20-42 | 5-31 | 15-22 |
| Softening agent | 1-2 | 1-2 | 3-5 | 3-5 | 2-5 | 3-5 |
| Flavors | 1-3 | 2-4 | 1-5 | 1-2 | 2-3 | 1-3 |
| Fillers | 3-5 | 5-10 | 3-5 | 3-10 | 3-11 | 5-10 |
| Intense sweetener | 0.05-0.1 | 0.5-2 | 0.1-0.5 | 0.1-0.5 | 0.5-1.0 | 0.1-1.0 |
| Superabsorbent polymer | 0.1-2.0 | 0.1-2.0 | 1-3 | 1-3 | 2-5 | 0 |

The gum compositions as set forth in Examples A-F above, are prepared by first combining any fillers with the gum base (elastomers) under heat at about 85°C. This combination is then mixed with the bulking agents, softening agents, and superabsorbent polymers for six minutes. The flavor blends which may include a pre-mix of flavors and cooling agents are added and mixed for 1 minute. Finally, the intense sweeteners are added and mixed for 5 minutes.

While there have been described what are presently believed to be the preferred embodiments of the invention, those skilled in the art will realize that changes and modifications may be made thereto, and it is intended to include all such changes and modifications as fall within the true scope of the invention.

## Claims

1. A composition comprising a gum base and at least one swellable hydrophilic polymer, wherein said polymer may be in combination with the gum base or be a component of said gum base; said hydrophilic polymer comprising a superabsorbent acrylate polymer having a swelling ratio of up to 1000:1, wherein the swellable hydrophilic polymer comprises a member selected from polyacrylate/polyalcohol copolymers, polyacrylate/polyacrylamide copolymers, crosslinked sodium polyacrylate, polyvinylalcohol polymer, and combinations thereof, and wherein the composition has a volume which increases 10-300% upon addition of water.

2. The composition of claim 1, wherein said gum base comprises a polymer selected from polyisobutylene, styrene butadiene rubber, butyl rubber and combinations thereof.

3. The composition of claim 1 or claim 2 wherein said swellable hydrophilic polymer is a superabsorbent acrylate polymer.

4. The composition of any preceding claim wherein said swellable hydrophilic polymer is present in an amount from 0.1% to 20% by weight of the total chewing gum composition.

5. A method of increasing the volume of a gum composition comprising:
(a) preparing a composition according to any of claims 1-4;
(b) contacting said composition with a liquid; and
(c) increasing the volume of said composition by 10-300%.

6. A method of increasing the perception of juiciness of a chewing gum composition comprising:
(a) preparing a composition according to any of claims 1-4.
(b) contacting said composition with a liquid to permit absorption of the liquid whereby the absorption provides an increased perception of juiciness.

## Patentansprüche

1. Zusammensetzung, umfassend eine Gummibasis und wenigstens ein quellfähiges hydrophiles Polymer, wobei das Polymer in Kombination mit der Gummibasis vorliegen oder ein Bestandteil der Gummibasis sein kann und das hydrophile Polymer ein superabsorbierendes Acrylatpolymer mit einem Quellverhältnis von bis zu 1000:1 umfasst, wobei das quellfähige hydrophile Polymer ein Element umfasst, welches aus Polyacrylat/Polyalkohol-Copolymeren, Polyacrylat/Polyacrylamid-Copolymeren, quer vernetztem Natriumpolyacrylat, Polyvinylalkohol-Polymer und Kombinationen daraus ausgewählt ist und wobei die Zusammensetzung ein Volumen hat, welches sich bei Zumischen von Wasser um 10 bis 300% erhöht.

2. Zusammensetzung nach Anspruch 1, wobei die Gummibasis ein Polymer umfasst, welches aus Polyisobutylen, Styrol-Butadien-Kautschuk, Butylkautschuk und Kombinationen daraus ausgewählt ist.

3. Zusammensetzung nach Anspruch 1 oder Anspruch 2, wobei das quellfähige hydrophile Polymer ein superabsorbierendes Acrylatpolymer ist.

4. Zusammensetzung nach einem der vorhergehenden Ansprüche, wobei das quellfähige hydrophile Polymer in einer Menge von 0,1 bis 20 Gewichtsprozent der gesamten Kaugummizusammensetzung vorhanden ist.

5. Verfahren zum Erhöhen des Volumens einer Gummizusammensetzung, umfassend:
(a) Vorbereiten einer Zusammensetzung nach einem der Ansprüche 1 bis 4,
(b) Kontaktieren der Zusammensetzung mit einer Flüssigkeit, und
(c) Erhöhen des Volumens der Zusammensetzung um 10 bis 300%.

6. Verfahren zum Erhöhen der Wahrnehmung von Saftigkeit einer Kaugummizusammensetzung, umfassend:
(a) Vorbereiten einer Zusammensetzung nach einem der Ansprüche 1 bis 4,
(b) Kontaktieren der Zusammensetzung mit einer Flüssigkeit, um das Absorbieren der Flüssigkeit zu ermöglichen, wodurch das Absorbieren eine erhöhte Wahrnehmung von Saftigkeit vermittelt.

## Revendications

1. Composition comprenant une base de gomme et au moins un polymère hydrophile pouvant gonfler, dans laquelle ledit polymère peut être en combinaison avec la base de gomme ou être un composant de ladite base de gomme ; ledit polymère hydrophile comprenant un polymère d'acrylate superabsorbant ayant un taux de gonflement allant jusqu'à 1000:1, dans laquelle le polymère hydrophile pouvant gonfler comprend un membre choisi parmi les copolymères de polyacrylate/polyalcool, les copolymères de polyacrylate/polyacrylamide, le polyacrylate de sodium réticulé, un polymère d'alcool polyvinylique, et leurs combinaisons, et dans laquelle la composition a un volume qui augmente de 10 à 300 % lorsque de l'eau est ajoutée.

2. Composition selon la revendication 1, dans laquelle ladite base de gomme comprend un polymère choisi parmi le polyisobutylène, un caoutchouc butadiène-styrène, un caoutchouc butyle et leurs combinaisons.

3. Composition selon la revendication 1 ou 2, dans laquelle ledit polymère hydrophile pouvant gonfler est un polymère d'acrylate superabsorbant.

4. Composition selon l'une quelconque des revendications précédentes, dans laquelle ledit polymère hydrophile pouvant gonfler est présent en une quantité de 0,1 % à 20 % en poids de la composition totale de gomme à mâcher.

5. Procédé destiné à augmenter le volume d'une composition de gomme, comprenant :
(a) la préparation d'une composition selon l'une quelconque des revendications 1 à 4 ;
(b) la mise en contact de ladite composition avec un liquide ; et
(c) l'augmentation du volume de ladite composition de 10 à 300 %.

6. Procédé destiné à augmenter la perception de jutosité d'une composition de gomme à mâcher, comprenant :
(a) la préparation d'une composition selon l'une quelconque des revendications 1 à 4 ;
(b) la mise en contact de ladite composition avec un liquide pour permettre l'absorption du liquide, de façon que l'absorption confère une perception de jutosité accrue.
